# EUROPÄISCHE PATENTSCHRIFT

(11) **EP 1 196 696 B1**
(45) Veröffentlichungstag und Bekanntmachung des Hinweises auf die Patenterteilung: **07.05.2003**
(21) Anmeldenummer: 00945889.4
(22) Anmeldetag: 06.07.2000
(51) Int. Cl.: F16D 1/00

(54) **ROTOR MIT GESPALTENEM ROTORBLATT**
ROTOR WITH A SPLIT ROTOR BLADE
ROTOR DOTE D'UNE PALE FENDUE

(30) Priorität: 06.07.1999 DE 19931035
(43) Veröffentlichungstag der Anmeldung: 17.04.2002
(73) Patentinhaber: Bannasch, Rudolf, 13053 Berlin (DE)
(72) Erfinder: Bannasch, Rudolf, 13053 Berlin (DE)
(74) Vertreter: Grünecker, Kinkeldey, Stockmair & Schwanhäusser Anwaltssozietät
(86) Internationale Anmeldenummer: EP0006412
(87) Internationale Veröffentlichungsnummer: WO01002742

(56) Entgegenhaltungen:
- EP-A- 0 266 802
- DE-A- 19 752 369
- DE-C- 53 013
- DE-C- 63 661
- DE-C- 132 953
- FR-A- 808 801
- FR-A- 819 229
- FR-A- 1 062 473
- FR-A- 2 521 097
- GB-A- 215 192
- US-A- 3 504 990
- US-A- 4 445 817
- US-A- 5 269 647
- US-A- 5 269 656
- US-A- 5 890 875

## Beschreibung

Die Erfindung betrifft einen Rotor, der im Betrieb in einer Hauptströmungsrichtung von einem Fluid durchströmt ist, mit einem um eine Rotorachse drehbar angeordneten Rotorblatt, das sich zumindest abschnittsweise von der Rotorachse weg in das Fluid erstreckt und in einem vorbestimmten Abstand von der Rotorachse in wenigstens zwei Teilblätter aufgespalten ist, wobei das eine Teilblatt in Drehrichtung und das andere Teilblatt entgegen Drehrichtung jeweils weg vom Rotorblatt gekrümmt ist und wobei die beiden Teilblätter zu einer Schlaufe zusammengeschlossen sind.

Rotoren zur Erzeugung von Vortrieb oder zur Erzeugung eines Drehmoments sind im Stand der Technik bekannt und umfassen im ersten Fall Propeller und Schiffsschrauben, Gebläse, Lüfter, Ventilatoren etc., im zweiten Fall strömungsangetriebene Repeller, Turbinen und Windrader. Bei Schiffspropellem oder Flugzeugpropellem dreht sich ein Rotorblatt, das an einer Nabe befestigt ist, um die Drehachse und erzeugt aufgrund seiner Profilform oder aufgrund seiner Anstellung bei Drehung um die Drehachse eine Vortriebskraft. Die Vortriebskraft verläuft über eine Umdrehung des Rotorblattes gemittelt meist im wesentlichen parallel zur Drehachse und treibt das Schiff oder Flugzeug voran. Bei Hubschrauberrotoren kann durch Verstellung der Rotorblätter während der Drehung um die Drehachse eine gegenüber der Drehachse geneigte Vortriebskraft erzeugt werden. Hierbei wird unter der Haupströmungsrichtung diejenige Richtung verstanden, unter der die Strömung den Rotor passiert, wenn man den Rotor in einer Femfeldbetrachtung auf eine Ebene reduziert.

Der Wirkungsgrad von Rotoren wird durch Strömungsverluste in Form von Wirbelbildung, Drall und - beim Betrieb des Rotors in flüssigen Fluiden - durch Kavitation verringert. Oftmals bildet auch die Schallabstrahlung ein Problem. Der von Schiffs- und Flugzeugpropellern, Hubschrauberrotoren, Windkraftanlagen, diversen Lüftern und Gebläsen, beispielsweise in Klimaanlagen, verursachte Lärm hat einen erheblichen Anteil an der heutigen akustischen Umweltbelastung.

Aus dem Stand der Technik sind gattungsgemäße Rotoren bekannt, die im Vergleich zu herkömmlichen Rotoren zu einer Verbesserung des Wirkungsgrads und einer Verringerung der Lärmabstrahlung bzw. Schallbildung führen.

So ist aus der DE 42 26 637 A1 ein Rotor bekannt, bei dem ein Rotorblatt in zwei Teilblätter gespalten ist. Durch diesen Rotor können die Vibrationen im Betrieb verringert werden.

Ein weiterer Rotor ist aus der DE-PS 83050 bekannt. Dieser Rotor führt zu einer Erhöhung des Reaktionsdruckes.

In der US 1,418,991 ist ein Rotor mit einem im Abstand von der Drehachse in zwei Teilblätter gespaltenen Rotorblatt beschrieben, wobei sich die Teilblätter relativ zum Rotorblatt in und entgegen der Drehrichtung des Rotors erstrecken. Durch den Rotor der US 1,418,991 kann der Strömungswiderstand verringert werden.

Gattungsgemäße Rotoren sind aus der US 3 504 990 und aus der US 4 445 817 bzw. DD-PS 614 381 bekannt.

Der in der US 3 504 990 gezeigte Rotor weist Tragarme auf, die die Strömung nicht beeinflussen. An den Enden der Tragarme ist eine Ringfläche befestigt, die über ihren Umfang den durch den Rotor erzeugten Vortrieb erzeugt.

Aus der US 4 445 817 bzw. DD-PS 614 381 ist ein Rotor bekannt, bei dem Rotorblätter aus einem sich eben und quer zur Hauptströmungsrichtung erstreckenden Rotorfuß und aus einem streifenförmigen Rotorblatt aufgebaut sind. Jedes streifenförmige Rotorblatt ist umgebogen und am in Drehrichtung nachfolgenden Rotorblatt befestigt. Auch bei diesem Rotor wird der Vortrieb ausschließlich am äußeren Umfang des Rotorblattes erzeugt.

In der DE 197 52 369 ist ein Quertriebskörper gezeigt, dessen quer zur Strömungsrichtung liegendes Ende unter Bildung einer Schlaufe aufgespalten ist.

In der EP 0 266 802 ist ein Mantelpropeller dargestellt, dessen Förderblätter Kegelmantelausschnitte bilden. Mantel und Förderblatt umschließen jeweils Löcher, durch welche die Fördermenge fließen.

Nachteilig bei den aus dem Stand der Technik bekannten Rotoren ist, dass die von ihnen erreichten Verbesserungen beim Wirkungsgrad und bei der Lärmabstrahlung für heutige Anwendungen nicht mehr ausreichen.

Der vorliegenden Erfindung liegt daher die Aufgabe zugrunde, durch einfache konstruktive Maßnahmen die eingangs genannten Rotoren dahingehend zu verbessern, dass ihr Wirkungsgrad erhöht wird.

Insbesondere wird angestrebt, dass der Rotor neben einem verbesserten Wirkungsgrad weniger Lärm erzeugt und somit besonders umweltfreundlich ist.

Diese Aufgabe wird für einen Rotor der eingangs genannten Art erfindungsgemäß einerseits dadurch gelöst, dass im Betrieb durch das Rotorblatt eine Vortriebskraft bzw. ein Drehmoment um die Rotorachse erzeugbar ist und dass die Rotorachse durch die von der Schlaufe umschlossene Schlaufenfläche hindurchgeht.

Andererseits wird die obige Aufgabe für einen Rotor der eingangs genannten Art dadurch gelöst, dass im Betrieb durch das Rotorblatt eine Vortriebskraft bzw. ein Drehmoment um die Rotorachse erzeugbar ist und dass die Anströmkante des einen, vorderen, Teilblattes zumindest in einem Bereich in der Nähe des Rotorblattes in Hauptströmungsrichtung stromauf der Anströmkante des anderen, hinteren Teilblattes liegt.

Diese Lösung ist einfach und führt zu einer erheblichen Lärmminderung bei den Rotoren.

Durch den Zusammenschluss der Teilblätter zu einer Schlaufe findet entlang der Schlaufenkontur eine kontinuierliche Änderung der Zirkulation von einem zum anderen Teilblatt statt. Bei einem Vorzeichenwechsel der Zirkulation zwischen den beiden Teilblättem muss die Zirkulation entlang der Schlaufenkontur einen Nulldurchgang aufweisen. Die Schlaufe bildet demnach eine Einrichtung, durch welche die Zirkulation des Rotors über den gesamten Schlaufenumfang und dadurch in der im Nachlauf erzeugten Wirbelschleppe gleichmäßig verteilt wird. Dadurch wird eine gegenüber dem Stand der Technik gleichmäßigere Zirkulationsverteilung entlang des Rotorblattes und entlang der die Schlaufe bildenden Teilblätter erreicht. Die Wirbelstärke wird räumlich über den gesamten Schlaufenumfang verteilt, was zu geringeren Verlusten durch Wirbelbildung und zu einer geringeren Erzeugung von Strömungslärm führt.

Durch den schlaufenförmigen Ringschluss der Teilblätter wird außerdem eine hohe mechanische Stabilität des Rotors erreicht. Dadurch kann das Strukturgewicht verringert und eine insgesamt filigranere Konstruktion erreicht werden. Auch kann in den Abschnitten der von den Teilblättern gebildeten Schlaufe, an denen die Zirkulation nur gering ausgeprägt ist, die also nur einen geringen Beitrag am Vortrieb leisten, die Profiltiefe vermindert werden. Auf diese Weise lässt sich der Reibungswiderstand verringern.

Verläuft die Drehachse bei einem Rotor mit nur einem Rotorblatt durch die Schlaufenebene, so lassen sich durch diese einfache konstruktive Maßnahme Unwuchten bei der Drehung des Rotors vermeiden.

Das Rotorblatt und die Teilblätter können für einfache Anwendungen wie beispielsweise einfache Lüfter oder Ventilatoren sowie Spielzeugflugzeuge und Spielzeugwindräder beispielsweise durch schräg angestellte Flächen, für technisch komplexere Anwendungen wie Flugzeugpropeller oder Schiffspropeller beispielsweise durch tragflügelähnliche Profile mit einer bestimmten Dickenverteilung und Wölbung gebildet sein. Ein sich entlang des Rotorblattes und der Teilblätter in Abhängigkeit von den lokalen Strömungsbedingungen ändemdes Profil führt zu besonders günstigen Strömungseigenschaften und zu einem verbesserten Wirkungsgrad. Im gleichen Zusammenhang können auch der Blatt-Tiefenverlauf und die örtlichen Anstellwinkel den lokalen Strömungsbedingungen angepasst werden.

Erfindungswesentlich ist die Erzeugung des Vortriebs oder des Drehmoments auch durch die Rotorblätter selber. Mit diesem Prinzip unterscheidet sich der erfindungsgemäße Rotor vom Rotor der DD-PS 61 438. Zwar bildet dieser Rotor ebenfalls eine Schlaufe aus, doch weist der dort dargestellte Rotor keine Rotorblätter auf, die sich von der Drehachse weg in die Strömung erstrecken und einen Vortrieb erzeugen: Das schlaufenförmig ausgebildete, umlaufende Band wird vielmehr durch Tragarme gehalten, welche die Flüssigkeitsströmung so wenig als möglich beeinflussen oder stören dürfen. Der Vortrieb wird beim Rotor der DD-PS 61 438 bzw. der US 4 445 817 ausschließlich durch das umlaufende Band erzeugt, das eine relative Arbeitsbewegung ähnlich der Wellenbewegung eines Fischschwanzes oder eines Vogelflügels ausführt. Diese Vortriebsart ist weist einen schlechten Wirkungsgrad auf. Mit dem genannten Prinzip unterscheidet sich der erfindungsgemäße Rotor auch von anderen bekannten Schlaufenkonstruktionen, beispielsweise dem Blattapparat der US 5,890,875. Auch dort sind keine Rotorblätter vorgesehen, so dass nur geringe Vortriebskräfte bzw. Drehmomente erzielt werden.

Bei der erfindungsgemäßen Ausgestaltung kann das eine Teilblatt zumindest in einem Bereich in der Nähe des Rotorblattes sowohl in Drehrichtung als auch in Hauptströmungsrichtung vor dem anderen Teilblatt liegen. Dabei kann entweder die Anströmkante des einen Teilblattes in Hauptströmungsrichtung stromauf der Anströmkante des anderen Teilblattes oder aber das eine Teilbtatt auch vollständig stromauf des anderen Teilblattes liegen. Bei dieser Anordnung der Teilblätter wird kann die Strömung von der Druckseite des vorderen, stromauf gelegenen Teilblattes zumindest im Bereich nahe des Rotorblattes auf die Saugseite des hinteren, stromab gelegenen Rotorblattes gerichtet werden. Durch die schnellere Strömung auf der Unterdruck- bzw. Saugseite des stromauf gelegenen Teilblattes wird der Umströmung des stromab gelegenen Teilblattes kinetische Energie zugeführt, was zu einer stabileren Umströmung des hinteren Teilblattes führt.

Die Teilblätter können in einer bevorzugten Ausgestaltung des Rotors sich allmählich im wesentlichen übergangsfrei vom Rotorblatt weg krümmen. Durch den kontinuierlichen Formübergang der Teilblätter können Eckenströmungen, welche bei sich stark ändernden Betriebsbedingungen des Rotors ansonsten an den Knickstellen auftreten und zu Verlusten führen können, vermieden werden.

In einer weiteren sehr vorteilhaften Ausgestaltung können die beiden Teilblätter an ihren Enden einstückig miteinander verbunden sein. Dieser Aufbau ist dank der mechanischen Verbindung der Teilblätter besonders stabil und belastbar, so dass die vom Rotor erzeugten Vibrationen verringert werden können. Außerdem wird die Verletzungsgefahr die durch die Spitzen der Teilblätter entsteht, minimiert.

Dabei können in einer vorteilhaften Weiterbildung der Erfindung die beiden Teilblätter vorzugsweise stoßfrei ineinander übergehen. Dies bedeutet, dass die beiden Teilblätter an ihrem Verbindungspunkt im wesentlichen die selben Profilformen aufweisen und deren Konturen weitgehend stoßfrei miteinander verbunden sind. Dies kann beispielsweise durch einstückige Ausformung der beiden miteinander verbundenen Teilblätter geschehen.

Die Strömungsverluste können unabhängig voneinander dadurch minimiert werden, dass in einer weiteren vorteilhaften Ausgestaltung sich die Abströmkante des Rotorblattes in der Abströmkante des hinteren, stromab gelegenen Teilblattes vorzugsweise fließend fortsetzt. Ebenso kann sich in einer weiteren vorteilhaften Ausgestaltung die Anströmkante des Rotorblattes in der Anströmkante des vorderen, stromauf gelegenen Teilblattes fortsetzen. Auf diese Weise wird verhindert, dass die Strömung durch Unregelmäßigkeiten an der Anströmkante ungünstig beeinflusst wird. Ebenso kann sich die Zirkulationsverteilung bereits bei kleinen Unregelmäßigkeiten an der Abströmkante am entsprechenden Rotor- bzw. Teilblatt stark verändern. In einer weiteren Ausgestaltung, die insbesondere bei einem erfindungsgemäßen Rotor mit nur einem Rotorblatt vorteilhaft ist, kann die Drehachse durch die Schlaufenfläche verlaufen.

In einer weiteren Ausgestaltung kann der Rotor mit einer Mehrzahl von in Drehrichtung vorzugsweise gleich beabstandeten Rotorblättern versehen sein, bei denen das vordere, stromauf gelegene Teilblatt eines Rotorblattes jeweils mit dem hinteren, stromab gelegenen Teilblatt eines in Umfangsrichtung vorauslaufenden Rotorblattes verbunden ist. Diese Ausgestaltungen stellen bei geringem Materialaufwand eine Zirkulationsumkehr entlang der Schlaufe sicher. Durch die höhere Anzahl an Rotorblättem lässt sich ein insgesamt größerer Vortrieb bei kleinerem Bauvolumen erreichen. Der Vorteil dieser Ausgestaltung liegt in der Kombination eines hohen Vortriebs oder Drehmoments mit einer gleichmäßig guten Verteilung der Zirkulation im Nachlauf des Rotors. Trotz hoher Leistung bleibt der Rotor in dieser Ausgestaltung leise. Bevorzugt sind bei dieser Ausgestaltung die Teilblätter jeweils in Umfangsrichtung benachbarter Rotorblätter unter Ausbildung einer Schlaufe miteinander verbunden.

Um bei verschiedenen Betriebsbedingungen optimale Strömungsverhältnisse am Rotorblatt und an den Teilblättern des Rotors zu erreichen, sollten die Rotorblätter und/oder die Teilblätter an veränderte lokale Strömungsbedingungen, also Strömungsbedingungen, die auf den Ort des jeweiligen Rotorblattes und/oder Teilblattes beschränkt sind, angepasst werden können. Hierzu kann das Rotorblatt und/oder das Teilblatt zumindest abschnittsweise mit einer elastischen Außenhaut versehen sein. Bei geeigneter Materialabstimmung und/oder entsprechender Vorspannung der Außenhaut sind lokale Veränderungen der Profilgeometrie von Rotorblatt und/oder Teilblatt entweder allein aufgrund der auf das Profil einwirkenden strömungsmechanischen Kräfte, also passiv, oder mittels einer Konturverstelleinrichtung, also aktiv, möglich, ohne dass Aufwerfungen, Falten oder Knicke, die die Strömung negativ beeinflussen, an der Außenhaut entstehen. Außerdem kann eine elastische Außenhaut bei geeigneter Wahl der Elastizität zu einer verlustfreieren Umströmung des Rotorblattes und / oder Teilblattes führen. Eine elastische Außenhaut ist in der Lage, durch lokal eng begrenzte Verformung auf Druckstörungen zu reagieren und diese Druckstörungen abzufangen, was in einer ruhigeren und auch geräuschärmeren Umströmung des Rotorblattes und / oder Teilblattes führt.

Auch kann in einer weiteren vorteilhaften Ausgestaltung der Rotor mit einer Profilverstelleinrichtung versehen sein, die auf die Außenhaut einwirkt und durch die Außenhaut zur lokalen oder auch globalen Veränderung einer Profilgeometrie des Rotorblattes und / oder des Teilblattes zumindest abschnittsweise verschiebbar ist. Dabei wird unter einer lokalen Veränderung eine Veränderung der Profilgemeometrie bzw. der Kontur des Rotor- bzw. Teilblattes verstanden, die sich nur in einem eng umgrenzten Bereich des Rotorblattes und / oder Teilblattes abspielt und die Umströmung in anderen Bereichen des Rotorblattes und / oder Teilblattes im wesentlichen unbeeinflusst lässt. Eine globale Veränderung der Profilgeometrie ändert dagegen einen großen Bereich der Profilgeometrie von Rotorblatt und / oder Teilblatt und führt zu einer wesentlichen Änderung der Umströmungscharakteristik von Rotorblatt und / oder Teilblatt.

In einer weiteren vorteilhaften Ausgestaltung kann der Rotor eine Nabe aufweisen, an der das Rotorblatt gehalten ist. Das Rotorblatt kann über eine Anstellwinkeleinstelleinrichtung zur Veränderung seines Anstellwinkels drehbar an der Nabe gehalten sein. Durch die Veränderung des Anstellwinkels kann auf recht einfache Weise der vom Rotor erzeugte Vortrieb über große Bereiche der Drehgeschwindigkeit des Rotors konstant gehalten bzw. den aktuellen Betriebsbedingungen angepasst werden. Bei elastischer Ausführung des Rotors wird zudem eine für die Umströmung günstige Verwindung der Blattstrukturen entlang der Schlaufenlinien ermöglicht. Ebenso kann eine Anstellwinkeleinstelleinrichtung vorgesehen sein, durch die das Teilblatt zur Veränderung eines Anstellwinkels drehbar am Rotorblatt gehalten ist. Unter einem Anstellwinkel versteht man dabei in der Strömungstechnik im allgemeinen eine Neigung der Profilsehne des Rotorblattes und / oder Teilblattes relativ zur lokalen Anströmung des Rotorblattes und / oder Teilblattes. Die Profilsehne verbindet die Anströmkante, d. h. die Verbindungslinie der vorderen Staupunkte des Rotorblattes und / oder Teilblattes, mit der Abströmkante, also der Verbindung der hinteren Staupunkte des Rotorblattes und /oder Teilblattes.

In einer weiteren vorteilhaften Ausgestaltung kann eine Pfeilwinkeleinstelleinrichtung vorgesehen sein, durch die das Rotorblatt im wesentlichen in Richtung des Vortriebes schwenkbar relativ zur Nabe gehalten ist. Durch diese Verstelleinrichtung kann der Pfeilwinkel des Rotorblattes, also der Winkel der Anströmkante relativ zur Richtung der Hauptströmung verändert werden und sich die im Nachlauf des Rotorblattes erzeugte Zirkulation besser verteilen. Eine ähnliche Einrichtung kann auch zwischen Rotorblatt und Teilblatt vorgesehen sein, um auch die Pfeilung des Teilblattes zu ändern. Um bei der Einstellung des Pfeilwinkels auch die Drehkomponente der Anströmung von Rotorblatt bzw. Teilblatt zu berücksichtigen, kann die Pfeilwinkeleinstelleinrichtung vorteilhaft das Rotorblatt bzw. Teilblatt auch um eine parallel zur Drehachse verlaufende Strömung verschwenken.

In einer weiteren vorteilhaften Ausgestaltung kann zwischen Rotorblatt und Teilblatt eine Spreizwinkeleinstelleinrichtung vorgesehen sein, mit der zumindest ein Teilblatt des Rotors derart verbunden ist, dass sich ein im wesentlichen in Drehrichtung weisender Spreizwinkel zwischen zwei Teilblättern eines Rotorblattes in Abhängigkeit vom Betriebszustand des Rotors einstellen lässt.

Eine weitere adaptive Einstellmöglichkeit der Rotorgeometrie, die den Wirkungsgrad bei einer Vielzahl von Betriebssituationen verbessert, kann in einer weiteren vorteilhaften Ausgestaltung durch eine Ausfahreinrichtung erreicht werden, die zwischen Rotorblatt und Teilblatt vorgesehen ist und durch die das Teilblatt relativ zur Erstreckungsrichtung des Rotorblattes ausfahrbar gehalten ist. Durch Ausfahren der Teilblätter und / oder des Rotorblattes wird die den Vortrieb erzeugende Fläche vergrößert, so dass bei gleichbleibender Zirkulation pro Flächeneinheit des Rotorblattes und / oder des Teilblattes ein höherer Vortrieb erzeugt werden kann.

Schließlich können zwei oder mehr erfindungsgemäße Rotoren in Reihe geschaltet werden. Wenn sich die Rotoren relativ zueinander in entgegengesetzte Richtung drehen, überlagern sich im Nachlauf dieser beiden Rotoren die jeweiligen Wirbelstärken und löschen sich teilweise aus. Bei geeigneter Abstimmung kann dadurch sogar eine vollständige Auslöschung der Komponente der Wirbelstärke in Richtung der Drehachse, des Dralls, zumindest eines der Rotoren erreicht werden. Damit lassen sich durch Wegfall des Dralls im Nachlauf der hintereinander geschalteten Propeller die Verluste minimieren. Eine optimale Überlagerung der Wirbelstärken wird erreicht, wenn die Rotoren in etwa gleiche Durchmesser aufweisen. Der stromauf gelegene Rotor kann auch als Stator ausgebildet sein, wodurch der konstruktive Aufwand gesenkt wird.

Im folgenden wird der Aufbau und die Funktion eines erfindungsgemäßen Rotors mit einem in Teilblätter aufgespaltenen Rotorblatt anhand von Ausführungsbeispielen erläutert.

Es zeigen:
- Fig. 1: ein erstes Ausführungsbeispiel eines erfindungsgemäßen Rotors mit zwei jeweils gespaltenen Rotorblättern;
- Fig. 2A: einen Detailausschnitt II einer ersten Variante des Rotors der Fig. 1;
- Fig. 2B: einen Detailausschnitt II einer zweiten Variante des Rotors der Fig. 1;
- Fig. 3: einen Detailausschnitt II eines zweiten Ausführungsbeispiels des erfindungsgemäßen Rotors;
- Fig. 4: ein drittes Ausführungsbeispiel eines erfindungsgemäßen Rotors;
- Fig. 5: ein viertes Ausführungsbeispiel des erfindungsgemäßen Rotors;
- Fig. 6: ein fünftes Ausführungsbeispiel des erfindungsgemäßen Rotors;
- Fig. 7: zeigt ein weiteres Ausführungsbeispiel des erfindungsgemäßen Rotors;
- Fig. 8A - 8C: zeigen Veränderungen der Profilgeometrie eines adaptiven Rotorblattes gemäß einem weiteren Ausführungsbeispiel der Erfindung;
- Fig. 9: zeigt die Verstellmöglichkeiten bei einem adaptiv ausgebildeten, erfindungsgemäßen Rotorblattes gemäß einem weiteren Ausführungsbeispiel;
- Fig. 10A und 10B: zeigen das Wirbelfeld im Nachlauf eines herkömmlichen und eines erfindungsgemäßen Propellers;
- Fig. 11: zeigt ein weiteres Ausführungsbeispiel der Erfindung, bei dem zwei Rotoren hintereinander geschaltet sind;

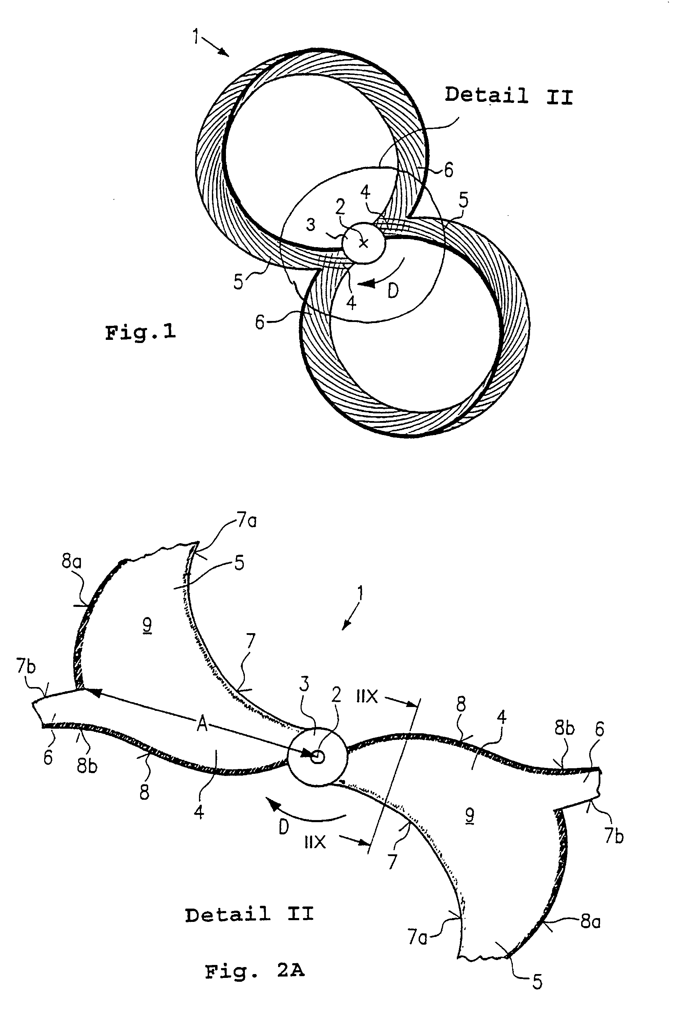

Zunächst wird der grundsätzliche Aufbau eines erfindungsgemäßen Rotors anhand des in der Fig. 1 dargestellten Ausführungsbeispieles beschrieben.

In der Fig. 1 ist ein Rotor 1 in einer Draufsicht in Richtung einer Drehachse 2 dargestellt, um die der Rotor drehbar gelagert ist. In der dargestellten Form kann der Rotor 1 für Lüfter, Propeller, Rotoren, aber auch als Turbine oder Windkraftanlage benutzt werden. Um die Drehachse ist eine Nabe 3 angeordnet, an der zwei Rotorblätter 4 befestigt sind. Diese Rotorblätter 4 erstrecken sich jeweils im wesentlichen in radialer Richtung weg von der Nabe bzw. Drehachse in ein Fluid, das den Rotor 1 umgibt.

Jedes Rotorblatt 4 ist in zwei Teilblätter 5, 6 gespalten. Die Teilblätter 5,6 der jeweils in Drehrichtung aufeinanderfolgenden Rotorblätter 4 sind zu einer Schlaufe zusammengeschlossen.

Im Betrieb dreht sich der Rotor 1 um die Drehachse 2 in eine Drehrichtung D. Der Rotor 1 kann sich dabei passiv mit einer Strömung mitdrehen, wie dies beispielsweise bei Windkraftanlagen der Fall ist. In diesem Fall wird der Rotor 1 im wesentlichen entlang der Achse 2 angeströmt. Bei entsprechender Profilierung und/oder Anstellung der Rotorblätter 4 sowie der Teilblätter 5, 6 wird dann ein Drehmoment um die Drehachse 2 erzeugt, das über einen Generator (nicht gezeigt), der mit einer sich mit dem Rotor drehenden Rotorwelle (nicht gezeigt) verbunden ist, zur Energieerzeugung verwendet werden kann. Umgekehrt kann der Rotor 1 durch einen Antriebsmotor (nicht gezeigt) auch aktiv angetrieben werden, wodurch durch die Drehung des Rotors aufgrund der entsprechend ausgebildeten Profilierung und / oder Anstellung der Rotorblätter 4 und / oder Teilblätter 5, 6 eine Strömung durch die von den Rotorblättern 4 und den Teilblättern 5, 6 überstrichenen Fläche sowie durch die Schlaufe und ein Vortrieb erzeugt wird.

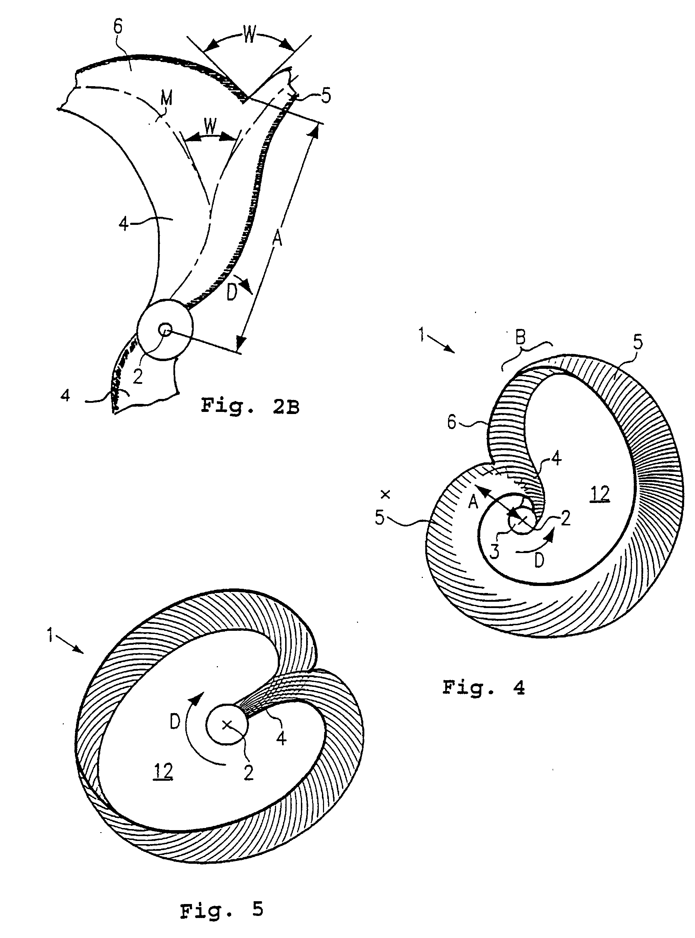

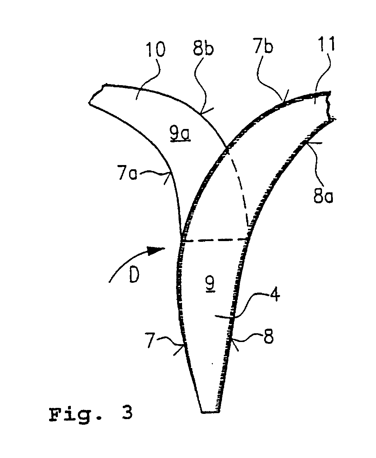

In den Fig. 2A und 2B ist zur Erläuterung der Geometrie des Rotorblattes sowie der Teilblätter ein Detailausschnitt II der Fig. 1 dargestellt. Die von den Rotorblättern gebildete Schlaufe ist der Einfachheit halber in Fig. 2A und 2B nicht dargestellt.

Das Rotorblatt 4 ist im Abstand A in ein vorne - in Hauptströmungsrichtung stromauf gelegenes - Teilblatt 5 und ein hinteres - in Hauptströmungsrichtung stromab gelegenes - Teilblatt 6 aufgespalten. Das Rotorblatt 4 geht dabei fließend ohne Querschnittssprünge in das jeweilige Teilblatt 5, 6 über.

Die in Hauptströmungsrichtung gelegene Anströmkante 7 des Rotorblattes 4 setzt sich nahtlos in der Anströmkante 7a des vorderen Teilblattes 5 fort. Die Abströmkante 8 des Rotorblattes 4 setzt sich nahtlos in der Abströmkante 8b des hinteren Teilblattes 6 fort. Das vordere Teilblatt 5 bildet nach der Aufspaltung des Rotorblattes 4 in die beiden Teilblätter 5, 6 eine eigene Abströmkante 8a aus, die sich zumindest im Bereich nahe des Rotorblattes 4, also im Bereich um die Aufspaltung, abschnittsweise mit einer Anströmkante 7b, die vom hinteren Teilblatt 6 ausgebildet wird, überlappt. Allerdings kann diese Überlappung auch wegfallen.

Das vordere Teilblatt 5 ist gegenüber dem hinteren Teilblatt 6 in Drehrichtung D gekrümmt, so dass sich das vordere Teilblatt 5 vom hinteren Teilblatt 6 wegspreizt.

In der Darstellung der Fig. 2A, mit Blickrichtung in Hauptströmungsrichtung entlang der Drehachse 2, stellt die Fläche 9 des Rotorblattes 4 sowie der beiden Teilblätter 5, 6 die beaufschlagte Druckseite dar, bei einem Propeller, Rotor und dgl. die Saugseite. Saugseite und Druckseite unterscheiden sich durch die auf ihnen herrschenden Druckverhältnisse voneinander. Der mittlere Fluiddruck auf der Saugseite ist niedriger als der mittlere Fluiddruck auf der Druckseite. Durch diese Druckdifferenz wird der in Richtung der Drehachse 2 gerichtete Vortrieb des Propellers bzw. bei einer Windkraftanlage das Drehmoment erzeugt. Saugseite und Druckseite werden jeweils durch die Anströmkanten 7, 7a und 7b sowie durch die Abströmkanten 8, 8a und 8b voneinander getrennt.

Die Anströmkante ist dabei die in Richtung der Anströmung des Blattes weisende Verbindungslinie der Staupunkte des Rotorblattes bzw. der Teilblätter, also derjenigen Punkte, an denen die mittlere Geschwindigkeit relativ zur betreffenden Rotorstruktur null wird. Die Abströmkante ergibt sich entsprechend aus der Verbindungslinie der hinteren Staupunkte.

Beim Ausführungsbeispiel der Fig. 2A ist das vordere Teilblatt 5 größer ausgestaltet, als das hintere Teilblatt 6 und das Rotorblatt in der Profiltiefe geteilt.

Alternativ kann das Rotorblatt 4 nicht in Richtung der Profiltiefe, sondern in Dickenrichtung, beispielsweise entlang der Mittenlinie, in ein saugseitiges Teilblatt 11 und in ein druckseitiges Teilblatt 10 aufgespalten sein Ein erfindungsgemäßer Rotor mit in Dickenrichtung aufgespaltenem Rotorblatt ist in Fig. 3 ebenfalls als Detailansicht II dargestellt. Die Mittenlinie eines Profils ist dabei die Linie aus den Kreismittelpunkten derjenigen Kreise, die in das Profil eingeschrieben Ober- und Unterseite des Profils berühren.

Es sind auch beliebige Übergangsformen des erfindungsgemäßen Rotorblattes denkbar, bei denen sich die Teilblätter beliebig überlappen können und die Anströmkante oder die Abströmkante eines Teilblattes jeweils mit der Saug- oder Druckseite des Rotorblattes verschmelzen kann.

Durch die Krümmung des Teilblattes 5 in Drehrichtung des Rotors 1 wird das vom vorderen Teilblatt 5 auf der Saugseite schnell strömende Fluid in Richtung des hinteren Teilblattes 6 gelenkt. Dies führt zu einer beschleunigten und damit stabileren Umströmung des hinteren Teilblattes.

Das saugseitige Teilblatt 11 bildet dabei eine eigene Druckseite (nicht bezeichnet) aus. Ebenso bildet das druckseitige Teilblatt 10 eine eigene Saugseite 9a aus. Das saugseitige Teilblatt 11 erstreckt sich gegenüber dem Hauptrotor 4 in Drehrichtung D, das druckseitige Teilblatt 10 erstreckt sich gegenüber dem Rotorblatt 4 entgegen der Drehrichtung. Die Saugseite des Teilblattes 11 geht in die Saugseite des Rotorblattes 4 über, die Druckseite des Teilblattes 10 in die Druckseite des Rotorblattes. Beim Ausführungsbeispiel der Fig. 1 sind die beiden Teilblätter 10, 11 in etwa gleich groß ausgestaltet. Allerdings ist hierbei auch, ähnlich wie bei der Variante der Fig. 2A, eine unterschiedlich große Ausgestaltung der Teilblätter 10, 11 möglich. Die Anströmkanten der beiden Teilblätter 10, 11 verschmelzen fließend zur Anströmkante des Rotorblattes 4, die Abströmkanten der beiden Teilblätter 10, 11 verschmelzen fließend zur Abströmkante des Rotorblattes 4.

Die Fig. 2B zeigt eine weitere Variante des Rotorblattes der Fig. 1 in einer Detailansicht II.

Die Rotorblätter der Fig. 2A und 2B unterscheiden sich durch die jeweilige Krümmung des Rotorblattes in oder entgegen Drehrichtung, im Abstand A, an dem das Rotorblatt 4 gespalten ist, in der relativen Größe der Teilblätter 5, 6 zueinander sowie in der relativen Größe der Teilblätter 5, 6 zum Rotorblatt 4.

In Fig. 2B ist ein Spreizwinkel W eingezeichnet, der den Winkelbetrag kennzeichnen soll, um den die beiden Teilblätter 5, 6, auseinander klaffen.

Der Spreizwinkel W kann im Raum zwischen der Abströmkante des einen (vorderen) Teilblattes und der Anströmkante des anderen (hinteren) Teilblattes oder zwischen den Mittenlinien M der beiden Teilblätter gemessen werden. Die Mittenlinie verbindet diejenigen Punkte, die in einem Radialschnitt die Sehnen halbieren.

Beim Rotor der Fig. 2B ist das hintere Teilblatt 6 größer ausgestaltet als das vordere Teilblatt 5. Dadurch wird vom hinteren Teilblatt 6 bei einem Propeller verstärkt Vortrieb bzw. bei einem Repeller ein größeres Drehmoment erzeugt als vom vorderen Teilblatt 5, was zu einer entsprechend höheren Konzentration an Wirbelstärke im Nachlauf des hinteren Teilblattes 6 führt. Durch die Verlängerung der Blattspitze zu einer Schlaufe kann aber auch in diesem Fall eine günstige Wirbelverteilung im Nachlauf erreicht werden, indem beispielsweise das Teilblatt mit der größeren Profiltiefe einen größeren Anteil am Schlaufenaumfang hat, als das Teilblatt mit der kleineren Profiltiefe.

Die Fig. 4 und 5 zeigen weitere Ausführungsbeispiele eines erfindungsgemäßen, als ein "Schlaufenpropeller" ausgestalteten Rotors mit nur einem Rotorblatt 4. Beim Rotor der Fig. 4 ist das vordere Teilblatt 5 mit dem hinteren Teilblatt 6 schlaufenförmig verbunden, so dass eine Schlaufenfläche 12 gebildet wird. Diese Schlaufenfläche rotiert in Drehrichtung D und wird vom Fluid durchströmt. Die beiden Teilblätter 5, 6 sind so gekrümmt, dass die Drehachse 2 innerhalb der Schlaufenfläche 12 liegt. Der Zusammenschluss der Teilblätter 5, 6 liegt also bezüglich dem Rotorblatt 4 typischerweise auf der entgegengesetzten Seite der Drehachse. Beim Ausführungsbeispiel der Fig. 4 ist das vordere Teilblatt 5 jedoch relativ lang und spiralförmig gekrümmt, wohingegen das hintere Teilblatt 6 kürzer ist und sich im wesentlichen radial von der Drehachse 2 weg erstreckt. Das vordere Teilblatt 5 und das hintere Teilblatt 6 sind in einem Bereich B miteinander verbunden, welcher in dieser speziellen Konfiguration in etwa in der Verlängerung des Hauptblattes liegt. In diesem Bereich B ändert auch die Zirkulation ihr Vorzeichen.

Die Teilblätter 5 und 6 gehen übergangslos ineinander über, so dass möglichst geringe Störungen in der Umströmung des Schlaufenpropellers erzeugt werden. Im Ausführungsbeispiel der Fig. 4 ist der Hauptrotor stark in Drehrichtung D gekrümmt und spaltet sich in einem relativ geringen Abstand A von der Drehachse in die beiden Teilblätter 5, 6 auf.

Beim Ausführungsbeispiel der Fig. 4 sind die Teilblätter 5, 6 unterschiedlich lang, besitzen aber in etwa die gleiche Profiltiefe. Allerdings können hier auch gleich große Teilblätter verwendet werden bzw. kann die Profiltiefe der Teilblätter variieren.

Entlang des Übergangs des Teilblattes 5 zum Teilblatt 6, entlang der Schlaufenrandes, muss sich der Drehsinn der Zirkulation ändern. Setzt man für einen Drehsinn der Zirkulation ein positives Vorzeichen und bezeichnet den Betrag der Zirkulation im Bereich der Aufspaltung des Rotorblattes 4 in die beiden Teilblätter 5, 6 bzw. 10, 11 mit Γ₀, so muss bei gleich großen Teilblättern die Zirkulation entlang der Schlaufe von +Γ₀/2 zu -Γ₀/2 wechseln.

Dieser Wechsel der Zirkulation findet entlang des Schlaufenelementes allmählich statt. Da die Stärke der im Nachlauf induzierten Wirbel von der örtlichen Änderung der Stärke des gebundenen Wirbels abhängt, ergibt sich in diesem Fall insgesamt eine kontinuierliche Wirbelschicht im Nachlauf, die den Propellerstrahl einhüllt und überall in etwa die gleiche Stärke hat.

Beim Schlaufenpropeller der Fig. 4 kann die gesamte Außenkontur genutzt werden, um für jede Anwendung die jeweils günstigste Vortriebsverteilung (bei einem angetriebenen Rotor) oder Energieausbeute (bei einem passiv betriebenen Rotor) entlang der Rotorblätter und Teilblätter zu erhalten. So kann beispielsweise durch stärker nach außen gezogene Schlaufenelemente oder eine etwas mehr ringförmige Gestaltung die Traglast der Außenteile variiert werden. Das wiederum lässt sich nutzen, um beispielsweise bei Schiffsschrauben die Kavitationsgefahr zu verringern. Durch den schlaufenförmigen Ringschluss der Teilblätter 5, 6 erreicht der Schlaufenpropeller eine hohe mechanische Stabilität, was es ermöglicht, den Schlaufenpropeller leichter zu bauen. Auch in Abschnitten des Schlaufenpropellers, an denen die Zirkulation nur gering ist, also insbesondere im Bereich des Vorzeichenwechsels der Zirkulation, die Profiltiefe vermindert werden.

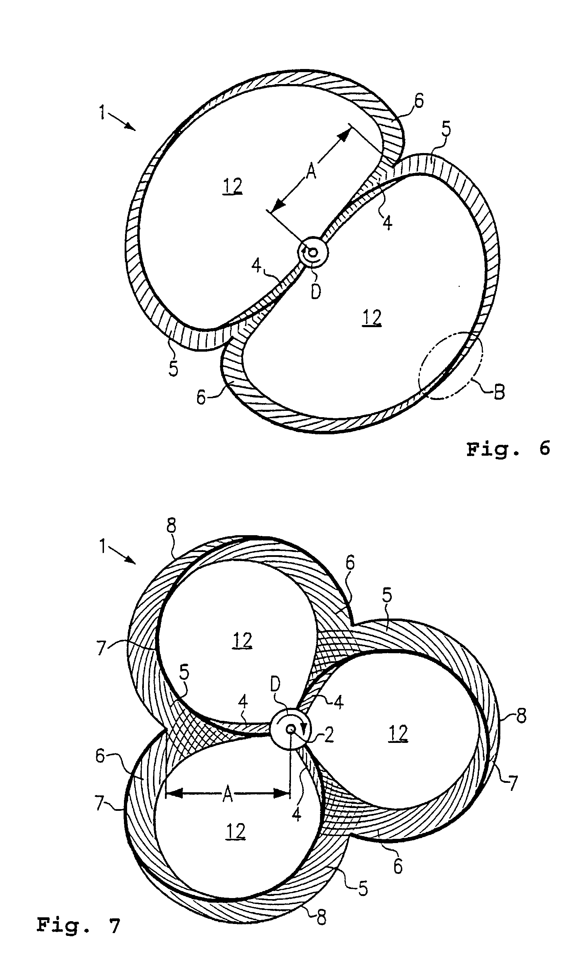

In den Fig. 5 und 6 sind weitere Ausführungsbeispiele des Schlaufenpropellers gezeigt.

Der einblättrige Schlaufenpropeller der Fig. 5 weist gegenüber dem Ausführungsbeispiel der Fig. 4 ein weniger stark gekrümmtes Rotorblatt 4 auf. Der Abstand A, bei dem sich das Rotorblatt 4 teilt, ist größer und die Teilblätter sind in etwa gleich lang. Insgesamt ist die Schlaufenfläche 12 beim Schlaufenpropeller der Fig. 5 runder ausgebildet, was das Auswuchten des Rotors erleichtert.

Die Ausführungsbeispiele der Fig. 6 zeigt ein weiteres Ausführungsbeispiel eines zweiblättrigen Schlaufenpropellers. Im Gegensatz zum Schlaufenpropeller der Fig. 1 ist der Schlaufenpropeller der Fig. 6 mit länglicheren Schlaufenflächen 12 versehen, die im wesentlichen durch einen größeren Abschnitt A zwischen der Aufspaltung des Rotorblattes 4 in die beiden Teilblätter 6 erreicht wird. In der Fig. 6 ist weiter der Bereich B dargestellt, in dem das vordere Teilblatt 5 des einen Rotorblattes 4 mit dem hinteren Teilblatt 6 des anderen Rotorblattes 4 verbunden ist. In diesem Bereich B wechselt die Zirkulation ihr Vorzeichen und weist einen Betrag nahe Null auf. Dieser Bereich B ist mit einer geringen Profiltiefe versehen. Außerdem kann in diesem Bereich das Profil sehr schlank und symmetrisch gehalten werden, da der Bereich B zum Vortrieb oder zur Energieerzeugung des Schlaufenpropellers 1 nur sehr wenig beiträgt. Damit können in diesem Bereich sowohl der Formwiderstand als auch die Reibung minimiert werden.

Das Prinzip des Schlaufenpropellers gemäß den Fig. 1 bis 6 kann auch auf mehrblättrige Rotoren übertragen werden. Ein Ausführungsbeispiel eines mehrblättrigen Schlaufenrotors ist in der Fig. 7 gezeigt. Dort ist ein Rotor 1 aus drei Rotorblättem 4, die in Drehrichtung D gleichmäßig voneinander beabstandet sind, aufgebaut. Die Rotoren 4 sind in jeweils gleichem Abstand A von der Drehachse 2 in ein vorderes Teilblatt 5 und ein hinteres Teilblatt 6 aufgeteilt. Das vordere Teilblatt 5 eines Rotorblattes 4 ist mit dem Teilblatt 6 des in Drehrichtung nächsten Rotorblattes 4 verbunden. Je nach Anwendungsfall kann die Richtung, in der die Teilblätter relativ zur Drehrichtung miteinander verbunden sind, auch umgekehrt werden.

Es entstehen so drei Schlaufen mit Schlaufenflächen 12. Die Schlaufenflächen 12 weisen jeweils eine gemeinsame Anströmkante 7 auf, die durchgängig von der Vorderkante eines Rotorblattes, vom vorderen Teilblatt 5 des selben Rotorblattes 4 und vom hinteren Teilblatt 6 des anderen Rotorblattes 4 gebildet wird. Ebenso ist die Abströmkante 8 der von den Teilblättern 5 und 6 sowie dem Rotorblatt, das sich an Teilblatt 6 anschließt, gebildeten Schlaufe jeweils durchgängig ausgebildet.

Basierend auf dem Prinzip gemäß dem Ausführungsbeispiel der Fig. 7 lassen sich Schlaufenrotoren mit einer beliebigen Anzahl von Rotorblättem 4 verwirklichen. Dabei sind auch kompliziertere Geometrien möglich, bei denen die Schlaufen ineinander verschachtelt werden, indem das vordere Teilblatt 5 des einen Rotorblattes beispielsweise nicht mit dem hinteren Teilblatt 6 eines benachbarten Rotorblattes 4, sondern mit einem hinteren Teilblatt eines weiter entfernt liegenden Rotorblattes 4 verbunden ist.

Als Weiterentwicklung dieser Variationsmöglichkeit sind auch Aufspaltungen in mehr als zwei Teilblätter möglich, die auf die erfindungsgemäße Weise zu räumlicheren Rotorstrukturen verknüpft werden können.

Erfindungsgemäß ist weiter vorgesehen, dass der Rotor 1 mit Einrichtungen versehen ist, die eine Anpassung der Rotorblatt- und Teilblatt-Geometrie an verschiedene Strömungsbedingungen ermöglicht.

Eine derartige Anpassung kann dadurch erreicht werden, dass das Rotorblatt 4 und / oder zumindest eines der Teilblätter 5 und 6 aus einem elastischen Material bestehen oder eine elastische Außenhaut aufweisen. Dabei ergibt sich als wesentlicher Vorteil, dass auch graduelle Veränderungen der Strömungsgeometrien von Rotorblatt und den Teilblättern insbesondere entlang der Schlaufenstruktur möglich sind.

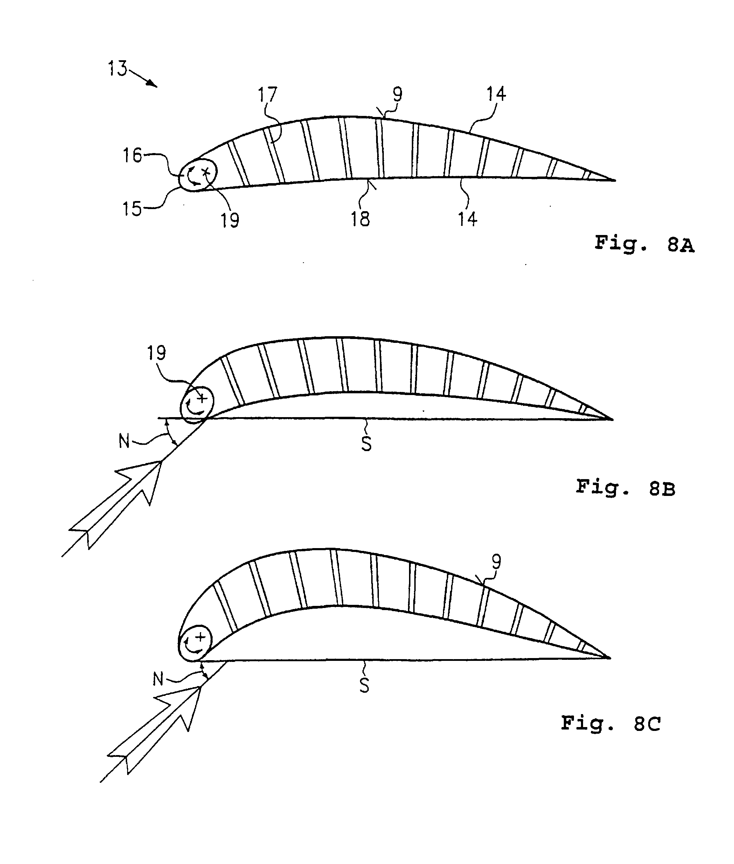

Mit einer elastischen Außenhaut kann beispielsweise die Geometrie eines Profils des Rotorblattes 4 und / oder eines Teilblattes 5 verändert werden. Dies ist in den Fig. 8A bis 8C schematisch dargestellt.

Die Fig. 8A zeigt einen Schnitt entlang der Linie IIX - IIX der Fig. 1. Die Schnittlinie IIX - IIX verläuft senkrecht zu einem von der Drehachse 2 abgehenden Radiusstrahl. Das Profil 13 ist mit einer elastischen und flexiblen Außenhaut 14 bedeckt. Das Profil 13 des Rotorblattes 4 oder eines der Teilblätter 5, 6 ist mit einer flexiblen Außenhaut 14 versehen. Die flexible Außenhaut 14 kann das Profil 13 vollständig, oder auch nur abschnittsweise an den Stellen umgeben, an denen die Kontur des Profils 13 gezielt verändert werden soll.

Im Inneren des Profils 13 ist eine Konturverstelleinrichtung vorgesehen, die in der Fig. 8A exemplarisch anhand einer die Nase 15 des Profils bildenden, exzentrisch gelagerten Nocke 16 und anhand von Verbindungselementen 17, die die Saugseite 9 des Profils 13 mit der Druckseite 18 verbinden. Die Konturverstelleinrichtung kann in Abhängigkeit von der Anströmung des Profils 13 die Form des Profils verändern. Beispielsweise kann, wie in den Fig. 8B und 8C gezeigt ist, durch die exzentrisch gelagerte Nocke 16 bei deren Drehung um die Drehachse 19 der Neigungswinkel der Nase verändert werden. So hat sich von der Fig. 8B zur Fig. 8C der Anstellwinkel N zwischen der durch den Pfeil gekennzeichneten Anströmung des Profils 13 und der die Anströmkante mit der Abströmkante verbindenden Sehne S vergrößert. Um auf der Saugseite 9 bei dem starken Anstellwinkel N der Fig. 8C eine Ablösung an der Vorderkante zu vermeiden, wurde die Krümmung des Profils 13 in der Fig. 8C durch die Konturverstelleinrichtung erhöht, und die Nase in Richtung der Anströmung abgesenkt.

Dies kann beispielsweise durch Drehung der Nocke 16 und durch Verschieben der Verbindungselemente 17 relativ zueinander erreicht werden. Durch die Verschiebung der Verbindungselemente 17 ergibt sich eine segmentweise Verformung des Profils, der die elastische Außenhaut problemlos folgen kann, ohne dass die Konturglätte beeinträchtigt wird. Auf ähnliche Weise lässt sich auch eine Veränderung des hinteren Profilbereichs herbeiführen, beispielsweise ein S-Schlag erzeugen. Im Zusammenwirken von mehreren Konturverstelleinrichtungen kann somit die Profilgeometrie auf sehr komplexe Weise beeinflusst werden. Andere Prinzipien der Konturverstelleinrichtung sind ebenfalls denkbar, wie beispielsweise mehrere über das Profil verteilt angeordnete, exzentrische Nocken, die Teile der Außenhaut bei Drehung nach außen oder innen wölben, durch Druckluft aufgeblasene oder durch Rotationskräfte entfaltete Profile 13.

Auch flexible Profile, die sich unter Einwirkung der von der Umströmung erzeugten Kräfte zumindest abschnittsweise verformen, sind denkbar. Mit derartigen Profilen lässt sich die Umströmung passiv, also ohne Energiezufuhr von außen, allein aufgrund der von der Umströmung selbst aufgebrachten Energie beeinflussen.

In der Weiterführung dieser Prinzipien sind schließlich Ausführungsbeispiele denkbar, die aktive und passive Profilveränderungen auf vorteilhafte Weise kombinieren.

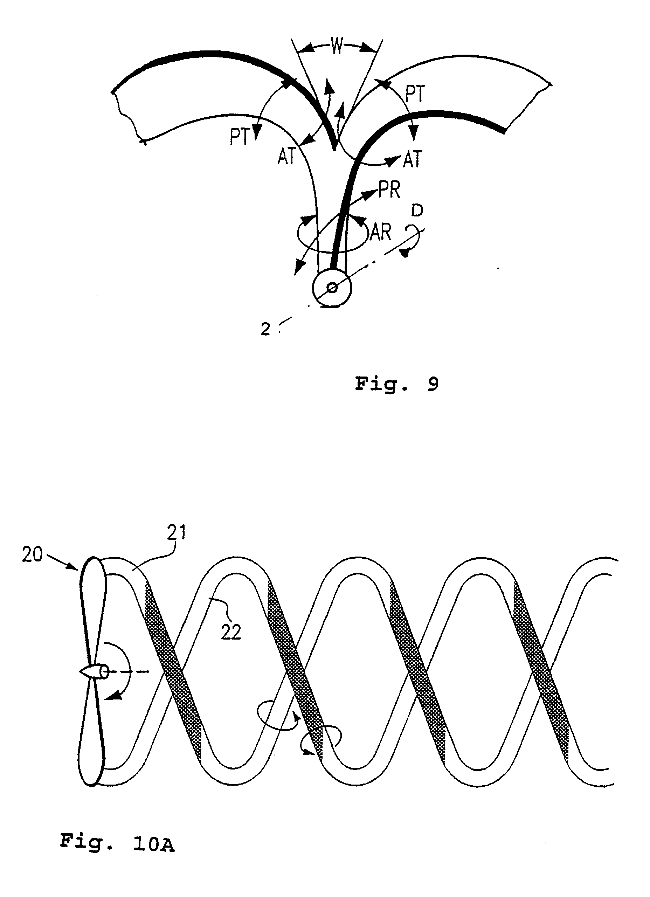

Weitere Verstellmöglichkeiten eines Rotors sind in der Fig. 9 gezeigt. Durch eine gelenkige Verbindung eines Rotorblattes 4 mit der Nabe 3 kann über eine nicht gezeigte Pfeilwinkelverstelleinrichtung die Neigung der Anströmkante des Rotorblattes 4 relativ zur Rotationsebene des Rotors 1 entlang des Pfeils PR, also in Richtung des Vortriebs bzw. in Hauptströmungsrichtung eingestellt werden. Durch den Pfeilwinkel lässt die Wirbelstärkekonzentration im Nachlauf durch die Sekundärströmung entlang der Anströmkante in radialer Richtung ebenfalls beeinflussen. Eine ähnliche Wirkung lässt sich auch bei den Teilblättern 5 und 6 erzielen, wenn diese ebenfalls über eine Gelenkverbindung mit einer eigenen Pfeilwinkeleinstellvorrichtung entlang der Pfeile PT in Richtung des Vortriebs und/oder in Hauptströmungsrichtung verstellbar sind. Ebenso kann eine Anstellwinkeleinstellvorrichtung (nicht gezeigt) vorgesehen sein, in der das Rotorblatt 4 um eine im wesentlichen radial zur Drehachse 2 verlaufende Drehachse entlang der Pfeile AR schwenkbar ist. Durch die Veränderung des Anstellwinkels lässt sich bei verschiedenen Drehzahlen und Anströmgeschwindigkeiten des Rotorblattes 4 der Vortrieb bzw. bei einen passiv betriebenem Rotor das Drehmoment optimieren. Auch die Teilblätter 5, 6 können über eine Anstellwinkeleinstelleinrichtung am Rotorblatt 4 derart angeordnet sein, dass der Anstellwinkel der Teilblätter in Richtung der Pfeile AT relativ zum Rotorblatt 4 verändert werden kann.

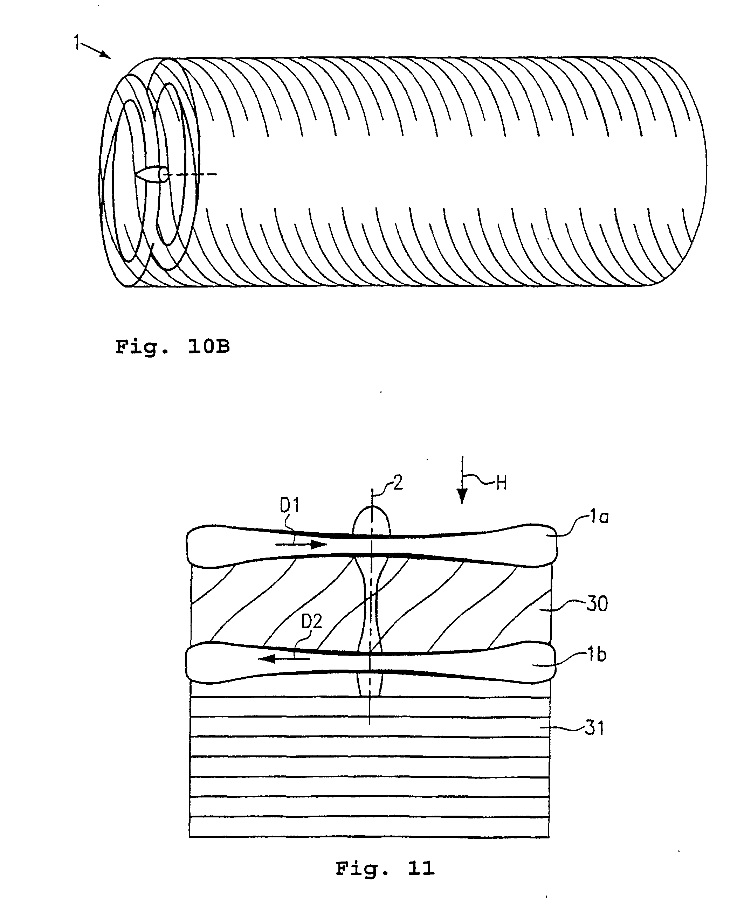

In den Fig. 10A und 10B ist die Wirkungsweise des erfindungsgemäßen Rotors 1 schematisch dargestellt. In Fig. 10A ist ein herkömmlicher zweiblättriger Propeller 20 gezeigt. An den Spitzen jedes Rotorblattes des Rotors 20 bildet sich ein Spitzenwirbel aus, der im Nachlauf zu zwei schraubenförmig ineinander verdrillten Wirbelschleppen 21, 22 führt. Die Wirbelstärke ist bei einem derartigen herkömmlichen Rotor in diesen Wirbelfäden 21, 22 konzentriert. Diese starke Wirbelkonzentration ist mit hohen Verlusten und einer erhöhten Geräuschentwicklung verbunden. Trifft ein derartiger Wirbelfaden 21, 22 auf einen Körper, so führt dies bekanntermaßen zur Erzeugung von Strömungslärm.

Beim in der Fig. 10B gezeigten erfindungsgemäßen Schlaufenrotor 1 ist dagegen die Zirkulation im Nachlauf des Schlaufenpropellers 1 bzw. des Rotors 1 mit erfindungsgemäß geteiltem Rotorblatt 4 gleichmäßig hüllenförmig verteilt. Dies führt zu geringeren Verlusten und zu einem geringeren Strömungslärm. Die gleichmäßige, hüllenförmige Verteilung der Wirbelstärke kann im Nachlauf des erfindungsgemäßen Rotors ähnlich wie ein Mantelgehäuse eines Mantelpropellers wirken. Durch die gleichmäßige Verteilung der Wirbelstärke im Nachlauf des Rotors ist es möglich, durch Überlagerung von zwei Nachläufen mit entsprechenden Wirbelstärken im jeweiligen Nachlauf die Komponente der Wirbelstärke in Richtung der Drehachse auszulöschen. Eine praktische Realisierung dieses Prinzips ist beim folgenden Ausführungsbeispiel diskutiert.

Fig. 11 zeigt eine Anordnung von Schlaufenpropellern 1 bzw. von Rotoren 1 mit erfindungsgemäß geteiltem Rotorblatt 4, durch die die strömungsmechanischen Verluste nochmals verringert werden können. In Hauptströmungsrichtung H sind zwei erfindungsgemäße Rotoren 1a und 1b hintereinander angeordnet. Die Drehgeschwindigkeiten der beiden Rotoren 1a und 1b sind unterschiedlich groß. Bei entsprechender Abstimmung der relativen Drehgeschwindigkeiten der Rotoren 1a und 1b kann der Drall aus dem Nachlauf 30 des vorderen Rotors 1a herausgenommen werden, so dass der Nachlauf des Rotors 1 b nicht mehr drallbehaftet ist. Der Strömungsdrall führt mit zu der oben angesprochenen schraubenförmigen Verdrillung der Wirbelfäden im Nachlauf des Rotors, wie dies schematisch in der Fig. 11 angedeutet ist. Durch den Drall wird also zusätzliche Energie in die Drehung des Strömungsfeldes im Nachlauf gesteckt, die zur eigentlichen Energieerzeugung oder Vortrieberzeugung des aktiv oder passiv betriebenen Rotors nicht verwendet werden kann. Durch entsprechende Gegendrehung des hinteren Rotors 1b wird dieser Drall herausgenommen, in Vortrieb umgewandelt und im Nachlauf des Rotors 1b findet die schraubenartige Verdrillung des Wirbelfeldes nicht mehr statt.

Die Rotoren 1a und 1b weisen zur Reduzierung der Strömungsgeräusche und von Vibrationen infolge Interferenz nicht dieselben Blattzahlen bzw. Blattgeometrien auf. Durch entsprechende Ausgestaltung kann der vordere Rotor 1a beispielsweise mehr Drall als Vortrieb erzeugen und der hintere Rotor 1b mehr Vortrieb als Drall. Im Extremfall kann der vordere Rotor 1 als Stator ausgebildet sein.

Ebenso ist es denkbar, eine Mehrzahl von Rotoren zu einer Freistrahlturbine anzuordnen.

## Patentansprüche

1. Rotor (1), der im Betrieb in einer Hauptströmungsrichtung (H) von einem Fluid durchströmt ist, mit einem um eine Rotorachse (2) drehbar angeordneten Rotorblatt (4), das sich zumindest abschnittsweise von der Rotorachse (2) weg in das Fluid erstreckt und in einem vorbestimmten Abstand (A) von der Rotorachse in wenigstens zwei Teilblätter (5, 6) aufgespalten ist, wobei das eine Teilblatt (5, 6) in die Drehrichtung (D) und das andere Teilblatt (5, 6) entgegen der Drehrichtung (D) jeweils weg vom Rotorblatt (4) gekrümmt ist und wobei die beiden Teilblätter (5, 6) zu einer Schlaufe zusammengeschlossen sind, **dadurch gekennzeichnet, dass** im Betrieb durch das Rotorblatt (4) eine Vortriebskraft bzw. ein Drehmoment um die Rotorachse (2) erzeugbar ist und dass die Rotorachse (2) durch die von der Schlaufe umschlossene Schlaufenfläche (12) hindurchgeht.

2. Rotor (1) nach Anspruch 1, **dadurch gekennzeichnet, dass** die Anströmkante (7a) des einen, vorderen, Teilbiattes (5, 6) zumindest in einem Bereich in der Nähe des Rotorblattes (4) in Hauptströmungsrichtung (H) stromauf der Anströmkante (7b) des anderen, hinteren, Teilblattes (6) liegt.

3. Rotor (1), der im Betrieb in einer Hauptströmungsrichtung (H) von einem Fluid durchströmt ist, mit zumindest zwei um eine Rotorachse (2) drehbar angeordneten Rotorblättern (4), die sich zumindest abschnittsweise von der Rotorachse (2) weg in das Fluid erstrecken und in einem vorbestimmten Abstand (A) von der Rotorachse in wenigstens zwei Teilblätter (5, 6) aufgespalten sind, wobei das eine Teilblatt (5, 6) in die Drehrichtung (D) und das andere Teilblatt (5, 6) entgegen der Drehrichtung (D) jeweils weg vom Rotorbfatt (4) gekrümmt ist und wobei jeweils ein Teilblatt (5, 6) des einen Rotorblattes (4) mit einem Teilblatt (5, 6) des anderen Rotorblattes (4) zu einer Schlaufe zusammengeschlossen ist, **dadurch gekennzeichnet, dass** im Betrieb durch das Rotorblatt (4) eine Vortriebskraft bzw. ein Drehmoment um die Rotorachse (2) erzeugbar ist und dass die Anströmkante (7a) des einen, vorderen Teilblattes (5, 6) zumindest in einem Bereich in der Nähe des Rotorblattes (4) in Hauptströmungsrichtung (H) stromauf der Anströmkante (7b) des anderen, hinteren Teilblattes (6) liegt.

4. Rotor (1) nach einem der oben genannten Ansprüche, **dadurch gekennzeichnet, dass** sich Abströmkante (8) des Rotorblattes (4) in der Abströmkante (8b) des hinteren Teilblattes (6) fortsetzt.

5. Rotor (1) nach einem der oben genannten Ansprüche, **dadurch gekennzeichnet, dass** sich die Anströmkante (7) des Rotorblattes (4) in der Anströmkante (7a) des vorderen gelegenen Teilblattes (5) fortsetzt.

6. Rotor (1) nach einem der oben genannten Ansprüche, **dadurch gekennzeichnet, dass** die beiden zur Schlaufe zusammengeschlossenen Teilblätter (5,6) glatt ineinander übergehen.

7. Rotor (1) nach einem der oben genannten Ansprüche, **dadurch gekennzeichnet, dass** das vordere Teilblatt (5) jeweils mit dem hinteren Teilblatt (6) verbunden ist.

8. Rotor nach einem der oben genannten Ansprüche, **dadurch gekennzeichnet, dass** das Rotorblatt (4) und/oder Teilblatt (5, 6; 10, 11) zumindest abschnittsweise mit einer elastischen Außenhaut (14) versehen ist.

9. Rotor nach einem der oben genannten Ansprüche, **dadurch gekennzeichnet, dass** eine Profilverstelleinrichtung vorgesehen ist, durch welche die Kontur (13) des Rotorblattes (4) und/oder des Teilblattes (5, 6; 10, 11) zumindest abschnittsweise verstellbar ist.

10. Rotor nach einem der oben genannten Ansprüche, **dadurch gekennzeichnet, dass** eine Anstellwinkeleinstelleinrichtung vorgesehen ist, durch die das Rotorblatt und/oder das Teilblatt (5, 6; 10 11) zur Veränderung eines Anstellwinkels drehbar am Rotorblatt gehalten ist.

11. Rotor nach einem der oben genannten Ansprüche, **dadurch gekennzeichnet, dass** eine Pfeilwinkeleinstelleinrichtung vorgesehen ist, durch die das Rotorblatt (4) und/oder das Teilblatt (5, 6; 10, 11) im wesentlichen in Richtung des Vortriebs schwenkbar am Rotorblatt (4) gehalten ist.

12. Rotor nach einem der oben genannten Ansprüche, **dadurch gekennzeichnet, dass** zwischen Rotorblatt (4) und Teilblatt (5, 6; 10, 11) eine Spreizwinkeleinstellvorrichtung vorgesehen ist, durch die zumindest ein Teilblatt (5, 6; 10, 11) derart schwenkbar am Rotorblatt (4) gehalten ist, dass ein in wesentlichen in Drehrichtung (D) weisender Spreizwinkel (W) zwischen zwei Teilblättern (5, 6; 10, 11) eines Rotorblattes (4) veränderbar ist.

13. Rotor nach einem der oben genannten Ansprüche, **dadurch gekennzeichnet, dass** eine Ausfahreinrichtung zwischen Rotorblatt (4) und Teilblatt (5, 6; 10, 11) vorgesehen ist, durch die das Teilblatt (5, 6; 10, 11) relativ zur Erstreckungsrichtung des Rotorblattes (4) in das Fluid ausfahrbar gehalten ist.

## Claims

1. Rotor (1), which in operation is flown through by a fluid in a main flow direction (H), said rotor having a rotor blade (4) arranged rotatable around a rotor axis (2) and extending at least partially away from said rotor axis (2) into said fluid, said rotor blade being split into at least two partial blades (5, 6) at a predetermined distance (A) from said rotor axis, one partial blade (5, 6) being curved in a direction of rotation (D) away from the rotor blade (4) and said other partial blade being curved against said direction of rotation (D) away from said rotor blade (4), said two partial blades (5, 6) being connected to form a loop, **characterized in that** a propulsion force or an angular momentum around said rotor axis (2) is generated in operation by said rotor blade (4), and **in that** said rotor axis (2) passes through the loop area (12) enclosed by said loop.

2. Rotor (1) according to Claim 1, **characterized in that** the leading edge (7a) of the one, front, partial blade (5, 6) is situated in the main flow direction (H) upstream of the leading edge (7b) of the other, rear, partial blade (6) at least in an area close to said rotor blade (4).

3. Rotor (1), which in operation is flown through by a fluid in a main flow direction (H), said rotor having at least two rotor blades (4) arranged rotatable around a rotor axis (2) and extending at least partially away from said rotor axis (2) into said fluid, said rotor blade being split in at least two partial blades (5, 6) in a predetermined distance (A) from said rotor axis, one partial blade (5, 6) being curved in a direction of rotation (D) away from the rotor blade (4) and the other partial blade being curved against said direction of rotation (D) away from said rotor blade (4), one partial blade (5, 6) of one rotor blade (4) being respectively connected with a partial blade (5, 6) of the other rotor blade (4) to form a loop, **characterized in that** a propulsion force or an angular momentum around said rotor axis (2) is generated in operation by said rotor blade (4), and **in that** the leading edge (7a) of said one, front, partial blade (5, 6) is situated in the main flow direction (H) upstream of the leading edge (7b) of said other, rear, partial blade (6) at least in an area close to said rotor blade (4).

4. Rotor (1) according to any one of the above claims, **characterized in that** the trailing edge (8) of said rotor blade (4) continues as the trailing edge (8a) of the rear partial blade (6).

5. Rotor (1) according to any one of the above claims, **characterized in that** the leading edge (7) of said rotor blade (4) continues as the leading edge (7a) of the front partial blade (5).

6. Rotor (1) according to any one of the above claims, **characterized in that** said two partial blades (5, 6) that are connected to form a loop merge smoothly with each other.

7. Rotor (1) according to any one of the above claims, **characterized in that** the front partial blade (5) is connected with the rear partial blade (6), respectively.

8. Rotor according to any one of the above claims, **characterized in that** at least one of said rotor blade (4) and said partial blade (5, 6; 10, 11) is at least partially provided with an elastic outer skin (14).

9. Rotor according to any one of the above claims, **characterized in that** a profile adjustment means is provided, by which the contour (13) of at least one of said rotor blade (4) and said partial blade (5, 6; 10, 11) is at least partially adjustable.

10. Rotor according to any one of the above claims, **characterized in that** an angle-of-attack adjustment means is provided, said angle-of attack adjustment means supporting at least one of said rotor blade (4) and said partial blade (5, 6) rotatable at said rotor blade (4) for adjustment of the angle of attack.

11. Rotor according to any one of the above claims, **characterized in that** a sweep angle adjustment means is provided, said sweep angle adjustment means supporting at least one of said rotor blade (4) and said partial blade (5, 6) on said rotor blade (4) pivotable essentially in the direction of propulsion.

12. Rotor according to any one of the above claims, **characterized in that** a spread angle adjustment means is provided between said rotor blade (4) and said partial blade (5, 6; 10, 11), through which said spread angle adjustment means at least one partial blade (5, 6; 10, 11) is pivotally supported at the rotor blade (4) such that a spread angle substantially pointing in the direction of rotation (D) is variable between two partial blades (5, 6; 10, 11) of a rotor blade (4).

13. Rotor according to any one of the above claims, **characterized in that** an extension means is provided between said rotor blade (4) and said partial blade (5, 6; 10, 11), said extension means supporting said partial blade (5, 6; 10, 11) with respect to the direction of extension of said rotor blade (4) extendably into the fluid.

## Revendications

1. Rotor (1) balayé en cours de fonctionnement par un fluide dans une direction d'écoulement principal (H), comprenant une pale de rotor (4) disposée rotativement autour d'un axe de rotor (2), s'étendant dans le fluide au moins par sections à l'écart de l'axe de rotor (2) et scindée à une distance prédéfinie (A) de l'axe du rotor en au moins deux pales partielles (5, 6), l'une des pales partielles (5, 6) étant incurvée dans la direction de rotation (D), et l'autre pale partielle (5, 6) étant incurvée à l'inverse de la direction de rotation (D), chacune à l'écart de la pale de rotor (4), et les deux pales partielles (5, 6) étant réunies en une boucle, **caractérisé en ce qu'**une force propulsive ou un couple autour de l'axe de rotor (2) peuvent être produits en cours de fonctionnement par la pale de rotor (4), et **en ce que** l'axe de rotor (2) passe au travers de l'aire de boucle (12) entourée par la boucle.

2. Rotor (1) suivant la revendication 1, **caractérisé en ce que** l'arête d'arrivée du fluide (7a) de l'une des pales partielles (5, 6), avant, se situe au moins dans une zone au voisinage de la pale de rotor (4), dans la direction d'écoulement principal (H), en amont de l'arête d'arrivée du fluide (7b) de l'autre pale partielle (6), arrière.

3. Rotor (1) balayé en cours de fonctionnement par un fluide dans une direction d'écoulement principal (H), comprenant au moins deux pales de rotor (4) disposées rotativement autour d'un axe de rotor (2), s'étendant dans le fluide au moins par sections à l'écart de l'axe de rotor (2) et scindées en au moins deux pales partielles (5, 6) à une distance prédéfinie (A) de l'axe du rotor, l'une des pales partielles (5, 6) étant incurvée dans la direction de rotation (D), et l'autre pale partielle (5, 6) étant incurvée à l'inverse de la direction de rotation (D), chacune à l'écart de la pale de rotor (4), et chaque pale partielle (5, 6) de l'une des pales de rotor (4) étant réunie en une boucle avec une pale partielle (5, 6) de l'autre pale de rotor (4), **caractérisé en ce qu'**une force propulsive ou un couple autour de l'axe de rotor (2) peuvent être produits en cours de fonctionnement par la pale de rotor (4), et **en ce que** l'arête d'arrivée du fluide (7a) de l'une des pales partielles (5, 6), avant, se situe au moins dans une zone au voisinage de la pale de rotor (4), dans la direction d'écoulement principal (H), en amont de l'arête d'arrivée du fluide (7b) de l'autre pale partielle (6), arrière.

4. Rotor (1) suivant l'une des revendications précitées, **caractérisé en ce que** l'arrête d'échappement du fluide (8) de la pale de rotor (4) se prolonge par l'arête d'échappement du fluide (8b) de la pale partielle arrière (6).

5. Rotor (1) suivant l'une des revendications précitées, **caractérisé en ce que** l'arête d'arrivée du fluide (7) de la pale de rotor (4) se prolonge par l'arête d'arrivée du fluide (7a) de la pale partielle avant (5).

6. Rotor (1) suivant l'une des revendications précitées, **caractérisé en ce que** les deux pales partielles (5, 6) réunies en une boucle ont un prolongement mutuel lisse.

7. Rotor (1) suivant l'une des revendications précitées, **caractérisé en ce que** chaque pale partielle avant (5) est assemblée avec la pale partielle arrière (6).

8. Rotor suivant l'une des revendications précitées, **caractérisé en ce que** la pale de rotor (4) et/ou la pale partielle (5, 6 ; 10, 11) est munie au moins par sections d'une peau extérieure (14) élastique.

9. Rotor suivant l'une des revendications précitées, **caractérisé en ce qu'**il est prévu un dispositif de réglage d'aile, qui permet de régler au moins par sections le contour (13) de la pale de rotor (4) et/ou de la pale partielle (5, 6 ; 10, 11).

10. Rotor suivant l'une des revendications précitées, **caractérisé en ce qu'**il est prévu un dispositif de réglage d'angle d'inclinaison, par lequel la pale de rotor et/ou la pale partielle (5, 6 ; 10, 11) est maintenue en rotation sur la pale de rotor pour modifier un angle d'inclinaison.

11. Rotor suivant l'une des revendications précitées, **caractérisé en ce qu'**il est prévu un dispositif de réglage d'angle de flèche, par lequel la pale de rotor (4) et/ou la pale partielle (5, 6 ; 10, 11) est maintenue avec une possibilité de pivotement sur la pale de rotor (4) essentiellement en direction de la propulsion.

12. Rotor suivant l'une des revendications précitées, **caractérisé en ce qu'**il est prévu entre la pale de rotor (4) et la pale partielle (5, 6 ; 10, 11) un dispositif de réglage d'angle d'écartement, par lequel au moins une pale partielle (5, 6 ; 10, 11) est maintenue avec une possibilité de pivotement sur la pale de rotor (4) de sorte qu'un angle d'écartement (W), dirigé essentiellement dans la direction de rotation (D), peut être modifié entre deux pales partielles (5, 6 ; 10, 11) d'une pale de rotor (4).

13. Rotor suivant l'une des revendications précitées, **caractérisé en ce qu'**il est prévu un dispositif de sortie entre la pale de rotor (4) et la pale partielle (5, 6 ; 10, 11), par lequel la pale partielle (5, 6 ; 10, 11) est maintenue avec une possibilité de sortie dans le fluide par rapport à la direction d'extension de la pale de rotor (4).
